(19) Europäisches Patentamt
European Patent Office
Office européen des brevets

(11) Numéro de publication: 0 220 083
A1

(12) # DEMANDE DE BREVET EUROPEEN

(21) Numéro de dépôt: 86401994.8

(22) Date de dépôt: 12.09.86

(51) Int. Cl.⁴: C 08 K 3/34
C 08 L 23/04, A 01 G 9/14

(30) Priorité: 20.09.85 FR 8513939

(43) Date de publication de la demande:
29.04.87 Bulletin 87/18

(84) Etats contractants désignés:
BE DE FR GB IT NL

(71) Demandeur: RHONE-POULENC CHIMIE DE BASE
25, quai Paul Doumer
F-92408 Courbevoie(FR)

(72) Inventeur: Chevallier, Gilles
Rés. la Tour Bat. H. 5, av. du Général de Gaulle
F-69300 Caluire(FR)

(74) Mandataire: Dubruc, Philippe et al,
RHONE-POULENC INTERSERVICES Service Brevets
Chimie 25, quai Paul-Doumer
F-92408 Courbevoie Cédex(FR)

(54) **Film transparent en matière plastique, résistant au vieillissement, notamment à usage agricole.**

(57) L'invention concerne un film transparent en matière plastique résistant au vieillissement.

Ce film est caractérisé par le fait qu'il contient des adjuvants contre le vieillissement et une charge à base de silico-aluminate de sodium de synthèse. Le film selon l'invention présente une bonne rétention aux radiations infrarouges.

Le film selon l'invention peut être utilisé notamment comme couverture transparente pour serres agricoles.

EP 0 220 083 A1

0220083

# FILM TRANSPARENT EN MATIERE PLASTIQUE, RESISTANT AU VIEILLISSEMENT, NOTAMMENT A USAGE AGRICOLE

La présente invention a trait à un film transparent en matière plastique, résistant au vieillissement, notamment à usage agricole, à base particulièrement d'éthylène ou de copolymères d'éthylène, présentant une bonne rétention aux radiations infrarouges.

On sait que les serres agricoles sont constituées par une couverture transparente en verre ou en matière plastique.

Elles ont pour but de maintenir une température suffisamment élevée pour la croissance rapide des végétaux, en évitant au maximum l'apport d'énergie.

L'effet de serre est obtenu lorsque la couverture transparente au soleil, retient les rayons thermiques.

Pour avoir une bonne couverture thermique, il est nécessaire que les rayons infrarouge soient dans la bande 700 à 2000 $cm^{-1}$ (5 à 15 $\mu$ m).

Les films en polyéthylène et / ou copolymères d'éthylène utilisés habituellement pour la construction de serres agricoles présentent un grave défaut car ils sont transparents aux rayons infra-rouge dans cette bande.

On a déjà proposé depuis longtemps d'incorporer des charges minérales dans les films pour serres.

Ainsi, on a préconisé l'utilisation de silices et/ou d'hydroxydes d'aluminium dans le FR 1 574 088, ou d'autres charges, comme dans les US 4 075 784 et 4 134 875.

Par ailleurs, il est connu depuis longtemps - US 3 347 696 - d'incorporer des charges minérales pour la rétention des radiations infra-rouge.

Malheureusement, soit les charges préconisées sont pures, et donc chères (silices pyrogénées), soit elles présentent un caractère abrasif, pour le matériel de transformation, soit elles conduisent à une résistance au vieillissement faible. En effet, on incorpore des adjuvants dans les films de manière à améliorer la résistance au vieillissement, or l'action de ces adjuvants est diminuée, voire inhibée par beaucoup de ces charges, en particulier les charges naturelles.

Or, on a trouvé, et c'est ce qui fait l'objet de la présente invention, que l'on pouvait pallier les inconvénients de l'art antérieur en incorporant aux films en matière plastique renfermant des adjuvants contre le vieillissement une charge à base de silico-aluminate de sodium de synthèse. Les silico-aluminates de sodium de synthèse sont obtenus par réaction d'un silicate de sodium en solution et d'un sel d'aluminium également en solution.

Avantageusement, les produits selon l'invention sont amorphes et répondent à la formule générale :

$$x\ Na_2O,\ Al_2O_3\ y\ SiO_2,\ w\ H_2O$$

x = 0,1 à 2
y = 1,5 à 16
w = 0,3 à 4

mais on peut aussi mettre en oeuvre des produits de type cristallin tels que zéolites de type A

$$1 \pm 0,2\ Na_2O,\ Al_2O_3\ 1,85 \pm 0,5\ SiO_2,\ 0 \text{ à } 6\ H_2O$$

Avantageusement, ils présentent une teneur en :

- Fe < 500 ppm, de préférence < 200 ppm
- Cu < 20 ppm, de préférence < 10 ppm
- Mn < 20 ppm, de préférence < 10 ppm

De manière générale, les silico-aluminates de sodium selon l'invention présentent une bande d'absorption des radiations infra-rouges entre 900 et 1300 $cm^{-1}$.

La granulométrie moyenne desdits silico-aluminates de sodium est de préférence comprise entre 1 et 40 µ m , déterminée au compteur COULTER.

Le film en polyéthylène et / ou copolymère d'éthylène est réalisé de préférence à partir d'un polyéthylène basse densité (d < 0,94) ou d'un copolymère d'acétate de vinyle de bonne transmission à la lumière visible.

On peut également mettre en oeuvre un film à base de polychlorure de vinyle.

Le silico-aluminate de sodium constituant la charge est apporté en une quantité de 1 à 10 parties en poids.

Selon l'invention, on observe qu'avec une quantité de charge allant jusqu'à 5 % , il n'y a pratiquement pas diminution de la transparence de façon sensible, alors que l'on double pratiquement l'efficacité d'absorption des rayons infrarouges.

De manière générale, selon l'invention, on conserve les propriétés thermiques dues à l'apport de la charge, tout en préservant l'activité des adjuvants de protection contre le vieillissement.

Ces adjuvants sont en particulier de type anti ultraviolet et sont apportés à raison de 0,5 à 2,0 % en poids par rapport au polymère constituant la matière plastique.

Mais la présente invention sera plus aisément comprise à l'aide des exemples suivants, donnés à titre indicatif, mais nullement limitatif, et des figures 1 à 9 annexées représentant les spectres d'absorption des divers films.

EXEMPLE 1

On met en oeuvre un produit amorphe répondant à la formule chimique globale :

$$14\ SiO_2,\ 1\ Na_2O,\ 1\ Al_2O_3,\ 5H_2O$$

Les propriétés physico-chimiques sont :

- pH (dilution 5 %)...................... $10,4 \pm 0,2$
- Surface spécifique (BET)............... 50 $m^2/g$
- Perte à 900° C par calcination......... 14 % maxi
- Indice de réfraction................... 1,55
- Granulométrie.......................... 7 μ m

Le silico-aluminate est additionné à un polyéthylène basse densité (d = 0,93) à raison de 1,2 et 5 % en poids.

Des films sont réalisés avec ces mélanges, puis analysés par spectrométrie infra-rouge par absorption et transmission, (Fig.1 et 2).

La figure 3, qui donne le spectre en absorbance de ces différents mélanges, montre que ce silico-aluminate de sodium est caractérisé par une bande aux nombres d'ondes 1080-1100 $cm^{-1}$ (9,26 - 9,1 μ m).

Cette bande couvre une grande partie du spectre d'émission du corps noir à la température du sol.

La figure 3 montre que l'absorption des infra-rouges au nombre d'ordre 1080 - 1100 $cm^{-1}$ est directement proportionnelle à la quantité de silico-aluminate de sodium ajouté :

- courbe 1 sans additif,
- courbe 2 avec 1 % d'additif,
- courbe 3 avec 2 % d'additif,
- courbe 4 avec 5 % d'additif.

Par ailleurs l'on n'observe pas de dégradation sensible au vieillissement avec un taux de 0,8 % d'adjuvant ultra-violet.

EXEMPLE 2

On examine un silico-aluminate de sodium cristallin (zéolite 4A) de formule

$$2\ SiO_2,\ Al_2O_3,\ Na_2O,\ 4\ H_2O$$

Le spectre se caractérise par une bande large à 1000 $cm^{-1}$ (10 μ m).

La figure 4 donne les spectres en absorbance en comparaison de ceux obtenus avec le produit selon l'exemple 1 :

- courbe 1 silico-aluminate selon l'exemple 1,
- courbe 2 silico-aluminate selon l'exemple 2.

Dans la zone spectrale qui intéresse, le produit selon l'exemple 1 (en trait plein) a une bande d'absorption mieux centrée que le zeolite (en pointillé) par rapport au spectre d'émission du corps noir (1000 $cm^{-1}$), mais la bande est plus étroite.

EXEMPLE 3

Afin de mettre en évidence l'influence de la granulométrie, on étudie dans cet exemple le silico-aluminate selon l'exemple 1, broyé de différentes manières à 9 μm, 7 μm et 5 μm.

Les spectres par absorbance sont réalisés sur des films contenant 1 % de silico-aluminate.

On n'observe pas de différence sensible.

EXEMPLE 4

Afin de mettre en évidence le pouvoir thermique du produit, on réalise le test suivant.

Les films sont analysés par infrarouge moyen dans la bande allant de 4600 à 400 $cm^{-1}$.

La première étape consiste à établir la proportion de lumière transmise et de lumière absorbée ou réfléchie et diffusée.

On considère que la lumière émise par la source du spectrophotomètre infra-rouge arrive sur le film sous une incidence normale :

- une partie de cette lumière incidente se trouve réfléchie. Cette perte de lumière incidente se traduit dans le spectre par un fond continu d'absorption.
  L'absorption A, à une longueur d'onde considérée (A), obéit à la loi de Beer

  $$A\lambda = \varepsilon cl$$

  avec

  . $\varepsilon$ coefficient d'extinction molaire à la longueur d'onde considérée

  . c concentration molaire de l'entité responsable de l'absorption

  . l chemin optique - c'est-à-dire l'épaisseur du film

- le flux de lumière qui n'est ni absorbé, ni réfléchi, ni diffusé, correspond dans les spectres à la lumière transmise.

On assimile le flux de lumière émis par le sol et les plantes à celui du corps noir à la température considérée.

L'énergie émise par le corps noir en fonction de la longueur d'onde et de la température est donnée par la relation de Planck

$$E_\nu = \frac{h\, c^2\, \nu^5}{\exp\,(hc\nu/kT)-1}$$

avec

$\nu$ fréquence en $cm^{-1}$

h constante de Planck

k constante de Boltzmann

c vitesse de la lumière

T température absolue (°K)

On retient, comme température du corps noir équivalent, celle de 37° C. Les spectres sont tracés dans l'infrarouge moyen de 4600 à 400 $cm^{-1}$ (spectres en transmission et en absorbance).

La première difficulté, pour établir une comparaison entre films, est liée à l'épaisseur variable des échantillons examinés. Une normalisation des spectres est nécessaire. Cette normalisation s'effectue à partir des enregistrements en absorbance sur la bande du polyéthylène à 4332 $cm^{-1}$.

Cette normalisation entraîne une modification du fond d'absorption (lumière réfléchie ou diffusée). Une linéarisation des spectres assure l'élimination de ce fond d'absorption. Une soustraction sur la gamme spectrale du fond constant d'absorption est réalisée de manière à ramener la transmission à 1845 $cm^{-1}$ à un niveau proche de 98 %.

Dans le schéma suivant, on indique les différentes opérations réalisées :

| | | |
|---|---|---|
| Emission du corps noir à la température de 37° C entre 4600 et 400 $cm^{-1}$ | A | fig.5 |
| Enregistrement spectral du film entre 4600 et 400 $cm^{-1}$<br>Spectre en transmission<br>et<br>en absorbance | <br><br>B<br><br>C | <br><br>fig.2<br><br>fig.1 |
| Linéarisation :<br>Suppression de la lumière réfléchie et diffusée | C → D | |
| Normalisation (correction d'épaisseur) | D → E | |
| Conversion absorbance → transmission | E → F | fig.6 |
| Multiplication par A | F → G | fig.7 |
| Intégration de 4600 à 400 $cm^{-1}$. | Energie transmise dans la gamme spectrale considérée | |

→ = devient

Le schéma est appliqué sur les films de composition suivante :

- polyéthylène témoin
- copolymère d'éthylène et d'acétate de vinyle (14 %)
- polyéthylène contenant 1 % du produit selon l'exemple 1
- polyéthylène contenant 5 % du produit selon l'exemple 1

Le calcul des surfaces entre 4600 et 400 $cm^{-1}$ donne les énergies transmises par chacun des échantillons examinés.

L'énergie absorbée est donc la différence entre cette énergie et celle produite par le corps noir à la température considérée ($J\ m^{-2}\ s^{-1}$).

La linéarisation fait apparaître une énergie diffusée et réfléchie d'environ 12 %.

Le bilan énergétique est donné par le tableau suivant :

| Produits | Energie transmise | Energie absorbée | Energie absorbée de l'émission du corps noir % | Energie diffusée % | Energie totale captée (%) |
|---|---|---|---|---|---|
| Polyéthylène | 3,38 | 1,12 | 24,8 | 12 % | 36,8 |
| EVA (14 %) | 2,98 | 1,52 | 33,8 | 12 % | 45,8 |
| PE + 1 % produit | 3,22 | 1,28 | 28,5 | 12 % | 40,5 |
| PE + 5 % produit | 2,45 | 2,05 | 45,5 | 12 % | 57,5 |

où énergie absorbée = énergie émise par le corps noir
- énergie transmise

énergie totale = énergie absorbée + énergie diffusée

EXEMPLE 5

Cette technique nous permet de comparer différents produits qui absorbent dans l'infra-rouge entre 600 et 1800 $cm^{-1}$ et d'évaluer leur pouvoir thermique.

Les deux produits choisis sont deux silico-aluminates de sodium de composition et de structure différentes.

La méthode précédente nous donne les spectres normalisés et linéarisés (figure 8) où l'on remarque les deux pics d'absorption à 1079 $cm^{-1}$ pour le produit 1 et à 1005 $cm^{-1}$ pour le produit 2, avec un pic beaucoup plus étroit pour ce dernier (produit cristallisé).

Le test précédent appliqué à ces deux films nous donne les résultats suivants (figure 9) :

| Produits | Energie transmise | Energie absorbée | Energie absorbée % du corps % | Energie diffusée % | Energie totale captée % |
|---|---|---|---|---|---|
| PE + 5 % Produit 1 | 2,45 | 2,05 | 45,5 | 12 % | 58 |
| PE + 5 % Produit 2 | 2,74 | 1,76 | 39,2 | 12 % | 51 |

Ces résultats nous montrent que le produit 2, malgré sa bande d'absorption mieux centrée sur le maximum d'émission du corps noir fournit un film moins performant (14 % d'énergie absorbée de moins).

## REVENDICATIONS

1. Films transparents en matière plastique renfermant des adjuvants contre le vieillissement et présentant une bonne rétention aux radiations infrarouges, caractérisés par le fait qu'ils contiennent une charge à base de silico-aluminate de sodium de synthèse.

2. Film selon la revendication 1, caractérisé par le fait que le silico-aluminate de sodium est amorphe et répond à la formule générale

$$x\ Na_2O,\ Al_2O_3,\ y\ SiO_2,\ wH_2O$$

avec x = 0,1 à 2
y = 1,5 à 16
w = 0,3 à 4.

3. Film selon la revendication 1, caractérisé par le fait que le silico-aluminate de sodium est cristallin et répond à la formule

$$1 \pm 0{,}2\ Na_2O,\ Al_2O_3,\ 1{,}85 \pm 0{,}5\ SiO_2,\ 0\ à\ 6\ H_2O$$

4. Film selon d'une des revendications 1 à 3, caractérisé par le fait que le silico-aluminate de sodium présente une teneur en

Fe < 500 ppm
Cu < 20 ppm
Mn < 20 ppm

5. Film selon l'une des revendications 1 à 4, caractérisé par le fait que le silico-aluminate de sodium présente une bande d'absorption des radiations infrarouges entre 500 et 1300 $cm^{-1}$.

6. Film selon l'une des revendications 1 à 5, caractérisé par le fait que le silico-aluminate de sodium présente une granulométrie moyenne, déterminée au compteur COULTER, comprise entre 1 et 40 µ m.

7. Film selon l'une des revendications 1 à 8, caractérisé par le fait que le film est en polymère et / ou copolymère d'éthylène.

8. Film selon l'une des revendications 1 à 7, caractérisé par le fait qu'il renferme de 1 à 10 parties en poids de silico-aluminate de sodium.

9. Film selon l'une des revendications 1 à 8, caractérisé par le fait que l'adjuvant est constitué par un additif anti-ultraviolet apporté à raison de 0,5 à 2 % en poids par rapport à la matière plastique.

Office européen des brevets

# RAPPORT DE RECHERCHE EUROPEENNE

0220083
Numero de la demande

EP 86 40 1994

## DOCUMENTS CONSIDERES COMME PERTINENTS

| Categorie | Citation du document avec indication, en cas de besoin des parties pertinentes | Revendication concernee | CLASSEMENT DE LA DEMANDE (Int Cl 4) |
|---|---|---|---|
| X | GB-A-2 114 577 (SUMITOMO CHEMICAL CO.)<br>* Revendications; exemples *<br>----- | 1-9 | C 08 K 3/34<br>C 08 L 23/04<br>A 01 G 9/14 |
| | | | **DOMAINES TECHNIQUES RECHERCHES (Int Cl 4)** |
| | | | C 08 K<br>C 08 L<br>A 01 G |

Le présent rapport de recherche a ete etabli pour toutes les revendications

| Lieu de la recherche | Date d achèvement de la recherche | Examinateur |
|---|---|---|
| LA HAYE | 19-12-1986 | HOFFMANN K.W. |

CATEGORIE DES DOCUMENTS CITES

X particulièrement pertinent à lui seul
Y particulièrement pertinent en combinaison avec un autre document de la même catégorie
A : arrière-plan technologique
O : divulgation non-écrite
P : document intercalaire
T théorie ou principe a la base de l invention
E document de brevet antérieur mais publié a la date de depôt ou après cette date
D cité dans la demande
L cité pour d autres raisons
& : membre de la même famille, document correspondant

OEB Form 1503 03 82